Europäisches Patentamt

(19) European Patent Office

Office européen des brevets

(11) Publication number: **0 010 432**
**B1**

(12) **EUROPEAN PATENT SPECIFICATION**

(45) Date of publication of patent specification: **19.10.83**

(21) Application number: **79302252.6**

(22) Date of filing: **18.10.79**

(51) Int. Cl.³: **C 08 L 61/10, C 08 J 3/24, C 08 L 63/00, B 32 B 27/42, B 32 B 15/08, C 08 K 3/00**

(54) A 'B' stage polymer material based on a phenolic resin, a method of producing it and a laminate comprising a layer of this material.

(30) Priority: **20.10.78 GB 4132678**

(43) Date of publication of application: **30.04.80 Bulletin 80/9**

(45) Publication of the grant of the patent: **19.10.83 Bulletin 83/42**

(84) Designated Contracting States: **AT BE CH DE FR GB IT LU NL SE**

(56) References cited:
**DE - B - 2 305 254**
**DE - C - 271 825**
**GB - A - 869 495**
**US - A - 4 003 873**
**US - A - 4 105 623**

The file contains technical information submitted after the application was filed and not included in this specification

(73) Proprietor: **DESAI POLYMER DEVELOPMENTS LIMITED**
**Claremont House Claremont Bank Shrewsbury, Salop (GB)**

(72) Inventor: **Oswitch, Stanley Flat 4, Betton Strange Hall Betton Strange Shrewsbury, Salop (GB)**
Inventor: **Giddins, Arthur John 3 Weston Crescent Aldridge Walsall West Midlands, WS9 0HA (GB)**
Inventor: **Roberts, Richard Timothy 54 Landsdowne Road Bayston Hill Shrewsbury Salop (GB)**
Inventor: **Pickin, Kevin 10, Yew Tree Drive Bayston Hill Shrewsbury Salop (GB)**

(74) Representative: **Huntingford, David Ian et al, W.P. THOMPSON & CO. Coopers Building Church Street Liverpool L1 3AB (GB)**

Courier Press, Leamington Spa, England.

### A 'B' stage polymer material based on a phenolic resin, a method of producing it and a laminate comprising a layer of this material

The present invention relates to a 'B' stage plastics polymer material, to a method of producing said material, and to a laminate comprising at least one layer of said material.

Phenolic resin based plastics materials evolve in three stages which are connected with the degree of condensation. Firstly, there is the Resol or 'A' stage wherein the material is a soluble fluid which retains a large quantity of water which is generated during condensation, the material being only slightly chemically crosslinked. Secondly, there is the Resitol or 'B' stage wherein the material becomes a flexible homogeneous mass being partly chemically cross-linked, and finally there is the Resite or 'C' stage wherein the material is a fully chemically cross-linked thermoset.

It is well known that phenolic resin based plastics materials have good fire retardant properties and are generally heat resistant. Such known compositions, however, are normally rigid (that is in the 'C' stage) and are extremely brittle thus limiting their scope and useful application. Those known flexible phenolic materials (that is those in the 'B' stage and occasionally in the 'C' stage) exhibit poor stability and much lower resistance to fire when compared with the rigid materials and are, therefore, seldom used.

In U.S. Patent Specification No. 4,105,623 there is disclosed a method of making a moulding composition utilizing an inorganic filler, e.g. Portland cement, and monomers, e.g. phenol and formalin, which produce an aldehyde condensate. In U.S. Patent Specification No. 4,003,873 there is disclosed an adhesive composition comprising a curable phenol-aldehyde resin and from about 20 to about 55 percent, based on the weight of resin, of Portland cement. However, neither of these U.S. Patent Specifications disclose a material which has the advantages of the known rigid phenolic based materials, i.e. flame retardancy and heat resistance, and yet is still flexible.

By practice of the present invention there may be provided a material, and a method of manufacturing same, which has all the advantages of the known rigid phenolic based materials but which is still flexible and yet capable of being rigidified by the application of heat if so desired.

According to the present invention there is provided a 'B' stage plastics polymer material, characterized in that it comprises the reaction product of the following components: (a) a phenolic resol resin; (b) an acid catalytic curing system; (c) cement powder; and (d) plaster of Paris.

According to the present invention there is also provided a method of producing a 'B' stage plastics polymer material in accordance with the present invention, characterized in that a mixture of a phenolic resol resin, cement powder and plaster of Paris is formed, an acid catalytic curing system is then added to the mixture, and the resulting mixture is allowed to react to form the 'B' stage plastics polymer material.

Typically, the phenolic resol resin is a liquid phenolic resin.

In one embodiment of the present invention the 'B' stage plastics polymer material comprises the reaction product of (a) a phenolic resol resin, (b) an acid catalytic curing system, (c) cement powder, (d) plaster of Paris, and also (e) at least one polymeric material other than the phenolic resol resin.

Suitably, the at least one other polymeric material is any material capable of effecting a copolymerisation with the phenolic resol resin, for example it can be an epoxy resin. Epoxy resins which may be used include materials (resins) produced by reacting epichlorohydrin with Bisphenol-A and these materials are preferably used in a ratio of 1 part by weight of Bisphenol-A to 1 part by weight of epichlorohydrin.

The at least one other polymeric material is preferably utilized in the plastics polymer material of the present invention in an amount of up to 35 parts by weight, based on 100 parts of the phenolic resol resin.

In a further embodiment of the present invention the 'B' stage plastics polymer material comprises the reaction product of (a) a phenolic resol resin, (b) an acid catalytic curing system, (c) cement powder, (d) plaster of Paris, (e) optionally at least one polymeric material other than the phenolic resol resin, and also (f) at least one material selected from hollow fly-ash spheres, carbon black, mica, silica, glass fibre and other fibrous material. Component (f) is preferably used in an amount of up to 300 parts by weight, based on 100 parts by weight of the phenolic resol resin.

The formulations used to produce the 'B' stage plastics polymer material in accordance with the present invention may be varied both in the constituents and the quantity of each constituent to give a wide variety of physical properties.

For example, in one embodiment of the present invention, the 'B' stage plastics polymer material can be produced in the form of a flexible grout. When producing such flexible grouts, glass fibre, for example, chopped glass fibre, or any other fibrous material should not be present since such materials will deleteriously affect the flexibility of the grout. The flexible grouts have a putty-like texture and can be used to fill gaps, for example in bulkhead cable penetration structures and the like. It may, for example, be applied by simple trowelling techniques and offers excellent resistance to thermal, i.e., flame, penetration.

In a further embodiment of the present invention, the 'B' stage plastics polymer material can be produced in the form of a self-adhesive phenolic sheet. This embodiment obviates the need to apply

2

glues or any bonding agents when attaching the sheet to a substrate. One method of producing such self-adhesive phenolic sheets involves casting the sheet upon a non-porous, i.e. non-permeating, release paper or other film. For example, a suitable release paper is a polyethylene paper which has a suitable silicone treatment on the side which contacts the phenolic sheet being cast. When the phenolic sheet has been cast and the release paper removed, the face of the phenolic sheet which contacted the release paper is found to have an adhesive nature. An example of a suitable silicone treated polyethylene release paper is that manufactured by Stirling Coated Materials Ltd.

In a still further embodiment of the present invention, the non-drooping properties of sheets of the 'B' stage plastics polymer material may be improved by incorporating a layer of glass fibre tissue or scrim (for example, having an approximate weight of 7 grams/square metre) into the surface of the sheet. The effect is shown most dramatically by sheeting bonded to a vertical or non-horizontal surface. A non-glass scrim treated sample of a sheet of the polymer material in accordance with the present invention will tend to slowly creep or flow under its own weight, whereas a sheet of the polymer material in accordance with the present invention and containing the glass scrim in its surface remains stable for considerable periods of time, depending on the thickness of the phenolic sheet, ambient temperatures, etc.

If silicone carbide fibres, e.g. less than 1 mm in length, are included in the plastics polymer sheet in accordance with the present invention in place of the glass fibre (scrim), a considerable resistance to flow in sheets formed therefrom may be achieved. The silicon carbide may, for example be present, in the sheet, in an amount of from 2 to 15 percent by weight.

Other short fibres such as short ceramic fibres may, for example, result in an anti-flow effect or resistance to droop when included in the plastics polymer materials in accordance with the present invention.

The 'B' stage plastics polymer materials in accordance with the present invention will generally exhibit one or more of the following properties:—

(i) They will be non-combustible, for example up to a temperature of 2,000°C in air, and under a forced flame will generate effectively little or no visible smoke.

(ii) They will produce no toxic gases except minute quantities of carbon monoxide.

(iii) They have a resistance to flame penetration. For example, using a butane torch with a flame temperature of approximately 1300 to 1600°C the ablation rate will be of the order of 2 mm per hour.

(iv) The specific gravity will be of the order of 1.4.

(v) They will have sound/noise attenuation properties such that a 6 mm thick flexible sheet will show a retardation in sound of the order of 26 decibels over a large frequency range.

(vi) They act as excellent high temperature insulants due to their ability to carbonise and ablate under intense heat yet still retain their original shape together with a certain amount of structural integrity.

In addition to the above properties, the plastics polymer materials according to the present invention will typically have the following resistance to well known corrodents and solvents:

| Corrodent/solvent | Effect after 48 hours total immersion |
| --- | --- |
| Hydrochloric acid | No effect |
| Sodium hydroxide | Slight decomposition |
| Toluene | No effect |
| Xylene | No effect |
| Petroleum | No effect |
| Engine oil | No effect |
| Diethyl ether | No effect |
| Carbon tetrachloride | No effect |
| Methylene chloride | No effect |
| Acetone | Slightly soluble |
| Methanol | Dissolved slightly to give an orange solution |

It will be understood that the basic formulation of the 'B' stage plastics polymer materials can be suitably modified to cater for other such corrodents and solvents.

The electrical properties typical of the plastics polymer material according to the present invention are as follows for a 6 mm thick sheet.

(a) Surface resistivity=$3 \times 10^6$ ohms
(b) Volume resistivity=$4 \times 10^6$ ohm cms

The electrical properties of the material can similarly be modified by the incorporation of, for

3

# 0 010 432

exampe, a conducting carbon black if a conducting material is required, or alternatively particulate mica or silica can be introduced to improve electrical insulation.

The plastics polymer material according to the present invention has unexpectedly high fire retardant and heat and cold insulating properties. Therefore, it has many potential applications. For example, it can be used in thermal insulation where high temperature steam pipes need insulating. At present, such pipes are clad with either asbestos or mineral wool covered by a protective sheath. Problems are often encountered when using such materials in confined spaces or where complex shapes have to be covered. The material according to the present invention, however, may solve these problems in that a flexible sheet can be easily formed around a pipe or gland allowing the heat from the pipe to fully cross-link the sheet thereby alleviating the need to cover the finished insulation with a protective sheath.

A further potential application of the plastics polymer material in accordance with the present invention is as a liner for vessels into which molten metal is poured. In this application it has the advantages that it retains the heat in the molten metal for a longer period and protects the surface of the vessel from the high thermal shock that would occur if the molten metal contacted the naked vessel.

A further potential application of the plastics polymer material according to the present invention is in the manufacture of low temperature cryogenic cabinets since the plastics polymer material may be easily bonded to such materials as sheet steel using conventional adhesives, for example, epoxies.

The 'B' stage plastics polymer material of the present invention may be further polymerized by additional cross-linking, for example under the influence of heat, high frequency radiation or microwave radiation, to produce a rigid 'C' stage thermoset.

One particular method, in accordance with the method of the present invention, for manufacturing a 'B' stage plastics polymer material comprising phenolic resol resin, epoxy resin, Plaster of Paris, cement, hollow fly-ash spheres, glass fibres and catalyst system is as follows:

The Plaster of Paris, cement, hollow fly-ash and glass fibres are placed in the mixing chamber of a suitable mixer and preblended until they appear as a homogeneous mass. At this stage the phenolic resin and epoxy resin, which have been previously mixed together, are then added to the mixer whilst the initial ingredients are being further mixed. The mixture is then pumped from the mixing chamber to a dispensing unit which has the ability to add and disperse into the mix the catalyst system. The fully mixed formulation is then dispensed into a lined mould or on to a suitably prepared platen which is located in a press. The press is then closed and held in that position at a nominal pressure for a period of from 5 to 30 minutes at ambient temperature. The press is then opened and the product, which may be in sheet form, is then removed. The product so produced is always in the 'B' stage.

If a thermoset (i.e. 'C' stage) product be required then the platens of the press are heated to a temperature of from 120 to 150°C. Should a 'B' stage product require converting to a thermoset at a later date then it can be placed back in the press and heated or, alternatively, placed in an oven under similar temperature conditions.

It is obvious that there are other methods of producing the plastics polymer material according to the present invention, for example, by continuous calendering, extrusion, vacuum forming, injection moulding and other processes commonly used in the rubber and plastics industry. Similarly, there are alternative methods of mixing with the ingredients.

The plastics polymer material according to the present invention may be in the form of a syntactic foam if materials such as hollow fly-ash spheres are incorporated therein. The term "syntactic foam" will be clearly understood by one skilled in the art and is different from a plastics foam material formed by the incorporation therein of a foaming agent which evolves a gas thereby causing the plastics material itself to foam.

Laminates, comprising at least one layer of a 'B' stage plastics polymer material in accordance with the present invention and at least one layer of a metal foil, may be produced. An example of a suitable metal foil is aluminium foil. Preferably, the or each layer of the metal foil has a thickness of from 0.0125 mm to 0.5 mm and, preferably, the or each layer of the plastics polymer material has a thickness of about 9 mms. The laminates, particularly in the form of alternate layers of the plastics polymer material and metal foil, greatly improve the thermal resistance of the plastics polymer sheet using the same total thickness of insulating (or cladding) material. The presence of the metal foil assists in the conductance of thermal energy away from the structure being protected by the laminate and also presumably eliminates "hot spots". For example, in an experiment carried out on a 200 mm thick plastics polymer sheet in accordance with the present invention, and being used as a cladding for a pipe, an impinging flame at 1200° to 1300°C is found to result in a temperature of 147°C being reached after 50 minutes at the pipe/cladding interface. In a further similar experiment carried out on a "laminate" of only 18 mm thickness and comprising a 9 mm layer of a plastics polymer material in accordance with the present invention, a temperature of only 112°C was reached after 50 minutes under identical ignition conditions. After 60 minutes, the temperature at the pipe/laminate interface had reached only 129°C.

The present invention will now be further illustrated by way of the following examples which list the compositions of a number of plastics polymeric materials according to the present invention.

4

**0 010 432**

Example 1

The following is a basic formula of a typical polymeric plastics material:

| | Parts by weight |
|---|---|
| Phenolic resin (as typified by Lankro* LM36) | 100 |
| Catalyst (as typified by Phencat* 38) | 10—25 |
| Epoxy resin (as typified by CIBA CY 219) | up to 20 |
| Plaster of Paris (2 Ca SO$_4 \cdot$ H$_2$O) | 25—100 |
| Hollow fly-ash spheres (HCM) | 10—25 |
| Cement (Portland) | 5—60 |
| Glass fibre (6 mm length or similar) | 5—30 |

* "Lankro" and "Phencat" are Trade Marks.

Example 2

If it is desired to produce a material which has the properties of being semi-rigid, i.e. towards the end of the 'B' stage condition, and which is capable of being softened under the application of heat at approximately 60°C and fully cross-linked with the application of heat at elevated temperature of 130°C—150°C, then the basic formula given in Example 1 could be modified as follows:

| | Parts by weight |
|---|---|
| Phenolic resin (e.g. Schenectady** SMD3083 or Lankro LM36) | 100 |
| Catalyst (Phencat 38) | 25 |
| Epoxy resin | 8 |
| Plaster of Paris | 60 |
| Portland cement | 15 |
| Glass fibre (6 mm or 12 mm length) | 10 |
| HCM | 30 |

* "Schenectady" is a Trade Mark.

Example 3

If it is desired to produce a material which has the properties of being initially very flexible before being fully cross-linked by the application of heat at a temperature of 130°C then the basic formula given in Example 1 could be modified as follows:

| | Parts by weight |
|---|---|
| Phenolic resin (as above) | 100 |
| Catalyst (as above) | 25 |
| Plaster of Paris | 60 |
| HCM | 30 |
| Cement | 15 |
| Glass fibre (6 mm or 12 mm length) | 10 |
| Epoxy resin | 1 |

Example 4

If it is desired to produce a composite sheet material wherein a plastics polymer material according to the present invention is moulded over a single layer of continuous glass-fibre mat of typical weight 350 gms per square metre, to form a glass reinforced flexible material having good tear strength, then the basic formula of Example 1 could be modified as follows to provide a material for use as the plastics polymer material:

| | Parts by weight |
|---|---|
| Phenolic resin (as above) | 100 |
| Catalyst (as above) | 25 |
| Epoxy resin (as above) | 8 |
| Plaster of Paris | 60 |
| HCM | 30 |
| Cement | 45 |
| Glass fibre | 10 |

**0010432**

### Claims

1. A 'B' stage plastics polymer material, characterized in that it comprises the reaction product of the following components: (a) a phenolic resol resin; (b) an acid catalytic curing system; (c) cement powder; and (d) plaster of Paris.

2. A plastics polymer material as claimed in claim 1, characterized in that the cement powder is used in an amount of from 5 to 60 parts by weight, based on 100 parts by weight of the phenolic resol resin.

3. A plastics polymer material as claimed in claim 1 or claim 2, characterised in that the plaster of Paris is used in an amount of from 25 to 100 parts by weight, based on 100 parts by weight of the phenolic resol resin.

4. A plastics polymer material as claimed in any of claims 1 to 3, characterized in that it comprises the reaction product of components (a) to (d) and also (e) at least one polymeric material other than the phenolic resol resin.

5. A plastics polymer material as claimed in claim 4, characterized in that component (e) comprises an epoxy resin.

6. A plastics polymer material as claimed in claim 4 or claim 5, characterized in that component (e) is used in an amount of up to 35 parts by weight, based on 100 parts by weight of the phenolic resol resin.

7. A plastics polymer material as claimed in any of claims 1 to 6, characterized in that it comprises the reaction product of components (a) to (d), optionally component (e), and also (f) at least one material selected from hollow fly-ash spheres, carbon black, mica, silica, glass fibre and other fibrous material.

8. A plastics polymer material as claimed in claim 7, characterized in that component (f) is used in an amount of up to 300 parts by weight, based on 100 parts by weight of the phenolic resol resin.

9. A method of producing a 'B' stage plastics polymer material as claimed in any of claims 1 to 8, characterized in that a mixture of a phenolic resol resin, cement powder and plaster of Paris is formed, an acid catalytic curing system is then added to the mixture, and the resulting mixture is allowed to react to form the 'B' stage plastics polymer material.

10. A method as claimed in claim 9, characterized in that the mixture of the phenolic resol resin, cement powder, plaster of Paris, and acid catalytic curing system is held in a mould or a press for a period of from 5 to 30 minutes at ambient temperature to produce the 'B' stage plastics polymer material.

11. A laminate, characterized in that it comprises at least one layer of a 'B' stage plastics polymer material as claimed in any of claims 1 to 8 and at least one layer of a metal foil.

12. A laminate as claimed in claim 11, characterized in that the metal foil is aluminium foil.

### Revendications

1. Matériau polymère plastique de classe "B", caractérisé en ce qu'il est constitué par le produit de la réaction des composants suivants: (a) une résine résol phénolique; (b) un système durcisseur catalytique aciole; (c) du ciment en poudre; et (d) du plâtre de Paris.

2. Matériau selon la revendication 1, caractérisé en ce que le ciment en poudre est utilisé en une proportion de 5 à 60 parties en poids, basée sur 100 parties en poids de la résine résol phénolique.

3. Matériau selon l'une des revendications 1 et 2, caractérisé en ce que le plâtre de Paris est utilisé en une proportion de 25 à 100 parties en poids, basée sur 100 parties en poids de la résine résol phénolique.

4. Matériau selon l'une quelconque des revendications 1 à 3, caractérisé en ce qu'il est constitué par le produit de la réaction des composants (a) à (d) ainsi qu'au moins un matériau polymère (e) autre que la résine résol phénolique.

5. Matériau selon la revendication 4, caractérisé en ce que le composant (e) est constitué par une résine époxy.

6. Matériau selon l'une des revendications 4 et 5, caractérisé en ce que le composant (e) est utilisé en proportions allant jusqu'à 35 parties en poids, basée sur 100 parties en poids de la résine résol phénolique.

7. Matériau selon l'une quelconque des revendications 1 à 6, caractérisé en ce qu'il est constitué par le produit de la réaction des composants (a) à (d), éventuellement du composant (e), ainsi que de (f) qui est au moins une des matières suivantes: sphères creuses de cendres volantes, noir de carbone, mica, silice, fibres de verre et autres matières fibreuses.

8. Matériau selon la revendication 7, caractérisé en ce que le composant (f) est utilisé en une proportion allant jusqu'à 300 parties en poids, basée sur 100 parties en poids de résine résol phénolique.

9. Procédé de production du matériau selon l'une quelconque des revendications 1 à 8, caractérisé en ce qu'on prépare un mélange d'une résine résol phénolique, de ciment en poudre et de

6

plâtre de Paris, qu'on ajoute un système durcisseur catalytique acide au mélange, et qu'alors on fait réagir le mélange résultant pour former un matériau polymère plastique de la classe "B".

10. Procédé selon la revendication 9, caractérisé en ce que le mélange de résine résol phénolique, de ciment en poudre, de plâtre de Paris, et d'un système de durcisseur catalytique acide est maintenu dans un moule pour une durée de 5 à 30 minutes à la température ambiante pour produire un matériau polymère plastique de classe "B".

11. Matériau lamifié, caractérisé en ce qu'il comprend au moins une couche de matériau plastique polymère de classe "B" selon l'une des revendications 1 à 8 et au moins une couche d'une feuille métallique.

12. Matériau selon la revendication 11, caractérisé en ce que la feuille métallique est une feuille d'aluminium.

**Patentansprüche**

1. Kunststoffpolymermaterial der "B"-Stufe, dadurch gekennzeichnet, daß es die Reaktionsprodukte der folgenden Komponente enthält: (a) ein phenolisches Resolharz; (b) ein saures katalytisches Härtesystem; (c) Zementpulver; und (d) Gips.

2. Kunststoffpolymermaterial nach Anspruch 1, dadurch gekennzeichnet, daß das Zementpulver in einer Menge von 5 bis 60 Gewichtsteilen bezogen auf 100 Gewichtsteile des phenolischen Resolharzes verwendet ist.

3. Kunststoffpolymermaterial nach Anspruch 1 oder 2, dadurch gekennzeichnet, daß der Gips in einer Menge von 25 bis 100 Gewichtsteilen bezogen auf 100 Gewichtsteile des phenolischen Resolharzes verwendet ist.

4. Kunststoffpolymermaterial nach einem der Ansprüche 1 bis 3, dadurch gekennzeichnet, daß es die Reaktionsprodukte der Komponenten (a) bis (d) und zusätzlich (e) wenigstens ein polymerisches, von dem phenolischen Resolharz verschiedenes Material enthält.

5. Kunststoffpolymermaterial nach Anspruch 4, dadurch gekennzeichnet, daß die Komponente (e) ein Epoxiharz ist.

6. Kunststoffpolymermaterial nach Anspruch 4 oder 5, dadurch gekennzeichnet, daß die Komponente (e) in einer Menge von bis zu 35 Gewichtsteilen, bezogen auf 100 Gewichtsteile des phenolischen Resolharzes, verwendet ist.

7. Kunststoffpolymermaterial nach einem der Ansprüche 1 bis 6, dadurch gekennzeichnet, daß es die Reaktionsprodukte (a) bis (d), gegebenenfalls die Komponente (e), und zusätzlich (f) wenigstens ein Material enthält, welches ausgewählt ist aus hohlen Flugaschekugeln, Ruß, Glimmer, Kieselerde, Glasfasern und anderem faserigen Material.

8. Kunststoffpolymermaterial nach Anspruch 7, dadurch gekennzeichnet, daß die Komponente (f) in einer Menge von bis zu 300 Gewichtsteilen bezogen auf 100 Teile des phenolischen Resolharzes verwendet ist.

9. Verfahren zur Herstellung eines Kunststoffpolymermaterials der "B"-Stufe nach einem der Ansprüche 1 bis 8, dadurch gekennzeichnet, daß eine Mischung aus phenolischem Resolharz, Zementpulver und Gips bereitet wird, ein saures katalytisches Härtesystem der Mischung zugesetzt und die erzielte Mischung zur Bildung eines Kunststoffpolymermaterials der "B"-Stufe reagieren gelassen wird.

10. Verfahren nach Anspruch 9, dadurch gekennzeichnet, daß die Mischung aus phenolischem Resolharz, Zementpulver, Gips und saurem katalytischen Härtesystem für einen Zeitraum von 5 bis 30 Minuten auf Umgebungstemperatur zur Erzeugung des Kunststoffpolymermaterials der "B"-Stufe gehalten wird.

11. Schichtmaterial, dadurch gekennzeichnet, daß es wenigstens eine Schicht des Kunststoffmaterials der "B"-Stufe nach einem der Ansprüche 1 bis 8 und wenigstens eine Schicht aus Metallfolie enthält.

12. Schichtmaterial nach Anspruch 11, dadurch gekennzeichnet, daß die Metallfolie eine Aluminiumfolie ist.